# EUROPÄISCHE PATENTSCHRIFT

(11) **EP 2 905 074 B1**
(45) Veröffentlichungstag und Bekanntmachung des Hinweises auf die Patenterteilung: **24.04.2019**
(21) Anmeldenummer: 14154138.3
(22) Anmeldetag: 06.02.2014
(51) Int. Cl.: B01J 23/40, B01D 53/94, B01J 35/02

(54) **Katalytisch wirksame Zusammensetzung für einen Mehrschichtkatalysator zur Abgasnachbehandlung von Verbrennungsabgasen**
Catalytically active composition for a multi-layer catalyst for subsequent treatment of combustion exhaust gases
Composition catalytiquement active pour un catalyseur multicouches pour le post-traitement des gaz d'échappement de gaz de combustion

(43) Veröffentlichungstag der Anmeldung: 12.08.2015
(73) Patentinhaber: Heraeus Deutschland GmbH & Co. KG, 63450 Hanau (DE)
(72) Erfinder: Wille, Ansgar, 63454 Hanau-Mittelbuchen (DE); Bonifer, Marcus, 63075 Offenbach (DE); Kemmer, Martina, 63796 Kahl am Main (DE)
(74) Vertreter: Heraeus IP

(56) Entgegenhaltungen:
- EP-A2- 0 556 554
- DE-A1- 10 024 994

## Beschreibung

Die vorliegende Erfindung betrifft ein Verfahren zur Bereitstellung einer katalytisch wirksamen Zusammensetzung zur Abgasnachbehandlung von Verbrennungsabgasen in einem Mehrschichtkatalysator.

Schon seit langer Zeit wird insbesondere bei Kraftfahrzeugen das Abgas des Verbrennungsmotors mit Hilfe eines Katalysators nachbehandelt. Dabei besteht die Aufgabe des Katalysators darin, die bei der Verbrennung entstehenden Schadstoffe Kohlenwasserstoffe (CₘHₙ), Kohlenstoffmonoxid (CO) und Stickoxide (NOₓ) in die ungiftigen Stoffe Kohlenstoffdioxid (CO₂), Wasser (H₂O) und Stickstoff (N₂) umzuwandeln. Dabei finden die folgenden Oxidations- und Reduktionsreaktionen statt:

2 CO + O₂ → 2 CO₂

2 C₂H₆ + 7 O₂ → 4 CO₂+ 6 H₂O

2 NO + 2 CO → N₂ + 2 CO₂

Man unterscheidet verschiedene Arten von Katalysatoren. Neben dem 3-Wege-Katalysator sind am bekanntesten Oxidationskatalysatoren und NOₓ-Speicherkatalysatoren.

Der 3-Wege-Katalysator, auch geregelter Katalysator oder G-Kat genannt, gehört heute zur Standardausrüstung eines Otto-Pkws. Dabei bezieht sich das "geregelt" auf das Motormanagement mit seiner Verbrennung. Der Drei-Wege-Katalysator kann nur bei Fahrzeugen mit Ottomotor und Lambdaregelung eingesetzt werden. Bei einem Drei-Wege-Katalysator finden die Oxidation von CO und HₘCₙ sowie die Reduktion von NOₓ parallel zueinander statt. Voraussetzung dafür ist ein konstantes Luft-Kraftstoff-Gemisch im stöchiometrischen Verhältnis von Lambda gleich 1.

Im Otto-Motor stellt die Lambdasonde die geregelte Verbrennung des Treibstoffs sicher. Mit Hilfe der Lambdasonde wird im Abgas eines Verbrennungsmotors das Verhältnis von Luft zu Kraftstoff bestimmt. Die Messung basiert auf dem Restsauerstoffgehalt im Abgas. Sie ist der Hauptsensor im Regelkreis der Lambdaregelung zur katalytischen Abgasnachbehandlung mit einem geregelten Katalysator und liefert den Messwert an das Motorsteuergerät.

Die Lambdaregelung stellt im Abgas eines Verbrennungsmotors einen gewünschten Lambdawert ein. Als Lambda (λ) bezeichnet man dabei das Verbrennungsluftverhältnis. Dieses setzt die tatsächlich für eine Verbrennung zur Verfügung stehende Luftmasse ins Verhältnis zur mindestens notwendigen stöchiometrischen Luftmasse, die für eine vollständige Verbrennung des Kraftstoffs benötigt wird. Beim stöchiometrischen Kraftstoffverhältnis ist genau die Luftmenge vorhanden um den Kraftstoff vollständig zu verbrennen. Dies wird als λ=1 bezeichnet. Ist mehr Kraftstoff vorhanden spricht man von fettem Gemisch (λ<1), bei Luftüberschuss von magerem Gemisch (λ>1). Bei einer Abweichung vom stöchiometrischen Luft-Kraftstoff-Verhältnis in den Luftüberschuss, den mageren Bereich, werden nicht alle Stickoxide abgebaut, da die benötigten Reduktionsmittel schon vorher oxidiert werden. Im Luftunterschuss, im fetten Bereich, werden nicht alle Kohlenwasserstoffe und nicht das gesamte Kohlenstoffmonoxid abgebaut.

Das Verbrennungsluftverhältnis Lambda λ, auch Luftüberschuss, Luftüberschusszahl oder kurz Luftzahl genannt, ist eine Kennzahl aus der Verbrennungslehre. Aus der Zahl lassen sich Rückschlüsse auf den Verbrennungsverlauf, Temperaturen, Schadstoffentstehung und den Wirkungsgrad ziehen. Die richtige Abstimmung von Vergaser- oder Einspritzanlage und somit die Einstellung von Lambda λ hat einen großen Einfluss auf Motorleistung, Spritverbrauch und Schadstoffausstoß.

Die Lambdaregelung findet bei Otto-Motoren üblicherweise zwischen engen Grenzen von ca. 0,97<λ<1,03 statt. Den Bereich innerhalb dieser Grenzen bezeichnet man als Lambdafenster. Innerhalb dieses Bereiches wird die beste Reduzierung aller drei Schadstoffarten erzielt. Bei hoher Motorleistung wird durch einen fetten Motorbetrieb und dadurch kälterem Abgas einer Überhitzung und Zerstörung von Abgasbauteilen wie z. B. Krümmer, Turbolader, Katalysator vorgebeugt.

Damit im Betrieb ein Wert von λ = 1 erhalten werden kann, muss im Katalysator ausreichend Sauerstoff zur Verfügung stehen, um die oben gezeigten Oxidationsreduktionen ausführen zu können. Auf der anderen Seite muss bei der Reduktion freiwerdender Sauerstoff gebunden werden, damit die Reduktion der Stickoxide zu Stickstoff stattfindet. 3-Wege-Katalysatoren enthalten meist einen Sauerstoffspeicher, der unter oxidativen Bedingungen mit Sauerstoff aufgeladen wird und unter reduzierenden Bedingungen wieder Sauerstoff abgeben kann.

Neben dem Sauerstoffspeicher umfasst ein Katalysator häufig auch wenigstens ein Edelmetall; meist handelt es sich hierbei um Platin, Palladium und/oder Rhodium. Wird in einem Katalysator weiterhin Aluminiumoxid verwendet, so ist darauf zu achten, dass das Rhodium nicht auf das Aluminiumoxid aufgetragen wird. Bei höheren Temperaturen lagert sich das Rhodium in die poröse Struktur des Aluminiumoxids und steht damit für die eigentliche Katalyse-Reaktion nicht mehr zur Verfügung. So beschreibt beispielsweise EP 1053779 A1 einen Katalysator, in welchem die katalytisch aktive Schicht ein Cer-Komplexoxid und ein Zirkonium-Komplex-Oxid umfasst. Während sich auf dem Cer-Komplexoxid Palladium befindet, sind auf dem Zirkonium-Komplex-Oxid Platin und Rhodium aufgetragen.

DE 10024 994 A1 beschreibt einen Katalysator, bei welchem die Edelmetalle in getrennten Schichten auf einen Träger aufgebracht werden. Der Katalysator umfasst eine erste Überzugsschicht, gebildet auf einer hitzebeständigen Unterlage, und eine zweite Überzugsschicht, gebildet auf der ersten Überzugsschicht. Die erste Überzugsschicht beinhaltet Aluminiumoxid, welches Palladium trägt; die zweite Überzugsschicht beinhaltet Cer-Zirkonium-Komplexoxide, die sowohl Platin als auch Rhodium tragen.

Zur Verbesserung des Abbaus von Abgasen in einem Katalysator beschriebt WO 98/09726 A1 eine Beschichtung für einen Katalysator, welche einen ersten Träger für eine erste Edelmetallkomponente und einen zweiten Träger für eine zweite Edelmetallkomponente aufweist, in welcher die durchschnittliche Teilchengröße des zweiten Trägers größer ist als die durchschnittliche Teilchengröße des ersten Trägers. Hierdurch sollen unterschiedliche Edelmetalle im Betrieb des Katalysators voneinander getrennt vorliegen. Hierfür werden die jeweiligen Edelmetallkomponenten auf ihren Trägern fixiert und anschließend auf die gewünschte Größe gemahlen. Die so erhaltenen Fritten werden auf ein Substrat aufgetragen, wodurch man eine Schicht erhält, welche im unteren Bereich insbesondere die kleineren Partikel und im oberen Bereich insbesondere die größeren Partikel aufweist.

Unterschiedliche Größenverteilungen in einer katalytisch aktiven Schicht sind auch aus EP 0556554 A2 bekannt. Hier umfasst die Beschichtungsdispersion, welche auf einen Katalysator aufgebracht werden kann, Feststoffe mit einer mehrmodalen Korngrößenverteilung mit verschiedenen Kornfraktionen.

Gerade bei Motorrädern kann die Schwankung von λ beim Betrieb des Motors größer sein, als der für Otto-Motoren übliche Bereich von 0,97<λ<1,03. Hier ist es notwendig, dass der Katalysator auch bei größeren Abweichungen von λ=1, insbesondere im Bereich von 0,8<λ<1,2 noch funktioniert und die Abgase entsprechend umwandelt.

Es besteht somit Bedarf an katalytisch wirksamen Zusammensetzungen, welche auch hohe Lambdaschwankungen insbesondere im Bereich von 0,8<λ<1,2 ausgleichen können. Zudem sollten die Zusammensetzungen bei Verwendung in einem Katalysator zu hohen Umsatzraten bei der Abgasbehandlung führen. Insbesondere der Ausstoß an CO, HC, NOₓ und CO₂sollte sowohl im fetten als auch im mageren Betrieb des Motors gegenüber bekannten Katalysatoren reduziert werden.

Die Aufgabe der vorliegenden Erfindung besteht daher in der Bereitstellung eines Verfahrens zur Bereitstellung einer katalytisch wirksamen Zusammensetzung für einen Mehrschichtkatalysator, welche einen verminderten Ausstoß an CO, HC, NOₓ und CO₂bei fettem und magerem Betrieb eines Verbrennungsmotors ermöglicht.

Überraschenderweise hat sich gezeigt, dass die der vorliegenden Erfindung zugrunde liegende Aufgabe gelöst wird durch ein Verfahren zur Bereitstellung einer katalytisch wirksamen Zusammensetzung zur Abgasnachbehandlung von Verbrennungsabgasen in einem Mehrschichtkatalysator, wobei die Zusammensetzung ein Sauerstoffspeichermaterial, das ein oder mehrere aus der Gruppe der seltenen Erden ausgewählte Metalle aufweist, ein oder mehrere aus Platin, Rhodium und Palladium ausgewählte Edelmetalle, und Aluminiumoxid umfasst, wobei das Sauerstoffspeichermaterial ein Cer-Zirkonium-Oxid ist, wobei die Zusammensetzung eine Teilchengröße d90 im Bereich von 10 µm bis 35 µm, bevorzugt von 15 µm bis 30 µm, besonders bevorzugt von 19 µm bis 24 µm, eine Teilchengröße d50 im Bereich von 2,5 µm bis 11,5 µm, bevorzugt von 4 µm bis 10 µm, besonders bevorzugt von 5,5 µm bis 8,5 µm und eine Teilchengröße d10 im Bereich von 1 µm bis 4 µm, bevorzugt von 1 µm bis 2 µm, besonders bevorzugt von 1,0 µm bis 1,8 µm aufweist, und wobei das Verfahren die folgenden Schritte umfasst:
(i) Einbringen des Sauerstoffspeichermaterials in Wasser,
(ii) Zugabe von Edelmetall oder Edelmetallen in Form eines ihrer Salze in Lösung und
(iii) Einbringen von Aluminiumoxid in die in Schritt (ii) erhaltene Aufschlämmung.

Mit d90 wird die Partikelgröße bezeichnet, für die 90% der Partikel kleiner als der Wert d90 sind. Darüber hinaus kann die Teilchengröße der Zusammensetzung auch über die d50 und die d10 Partikelgröße definiert werden. Hier sind entsprechend 50% bzw. 10% der Partikel kleiner als der entsprechende Wert.

Bevorzugt weist die Zusammensetzung eine Teilchengröße d50 im Bereich von 2,5 µm bis 11,5 µm, bevorzugt im Bereich von 4 µm bis 10 µm, besonders bevorzugt von 5,5 µm bis 8,5 µm auf. Weiter bevorzugt weist sie eine Teilchengröße d10 im Bereich von 1 µm bis 4 µm, bevorzugt von 1 µm bis 2 µm, besonders bevorzugt von 1,0 µm bis 1,8 µm auf.

Die Bestimmung der Partikelgrößenverteilung erfolgte nach ISO 13320 mit dem Lasergranulometer CILAS 920 der Firma Quantachrome, Odelzhausen, Deutschland. Bei der Messung wurde eine niedrigenergetische Laserdiode mit einer Leistung von 3 mW und einer Wellenlänge von 830 nm verwendet. Die Begriffe "Teilchengröße", "Teilchengrößenverteilung" und "Partikelgrößenverteilung" werden in der vorliegenden Anmeldung synonym verwendet und bezeichnen jeweils die nach ISO 13320 per Lasergranulometer bestimmte Partikelgrößenverteilung.

Die mittels des erfindungsgemäßen Verfahrens bereitgestellte Zusammensetzung ist geeignet, zur Abgasnachbehandlung von Verbrennungsmotoren verwendet zu werden. Abgase von Verbrennungsmotoren enthalten Kohlenwasserstoffe und Kohlenstoffmonoxid, welche in der Nachbehandlung oxidiert werden. Stickoxide aus dem Abgas werden reduziert. Damit der Sauerstoff aus den Stickoxiden entfernt werden kann und gleichzeitig Kohlenwasserstoffe und Kohlenstoffmonoxid oxidiert werden können, umfasst die Zusammensetzung ein Sauerstoffspeichermaterial, welches ein oder mehrere Metalle, ausgewählt aus der Gruppe der seltenen Erden aufweist. Weiterhin enthält die Zusammensetzung wenigstens ein Edelmetall, welches aus Platin, Rhodium und Palladium ausgewählt ist.

Überraschenderweise hat sich nun gezeigt, dass bei einer Teilchengröße d90 im Bereich von 10 µm bis 35 µm, bevorzugt im Bereich von 15 µm bis 30 µm, besonders bevorzugt im Bereich von 19 µm bis 24 µm der mittels des erfindungsgemäßen Verfahrens bereitgestellten Zusammensetzung die Abgase aus Verbrennungsmotoren besonders gut abgebaut werden. Insbesondere bei mageren Bedingungen kann der Ausstoß an Kohlenwasserstoffen, Kohlenstoffmonoxid und Stickoxiden deutlich gegenüber Zusammensetzungen, welche Teilchengrößen von weniger als 10 µm aufweisen, verringert werden. Bei fettem Motorbetrieb sinkt insbesondere der Ausstoß an Kohlenstoffmonoxid deutlich ab. Gleichzeitig kann auch der Ausstoß an Kohlenstoffdioxid gering gehalten werden.

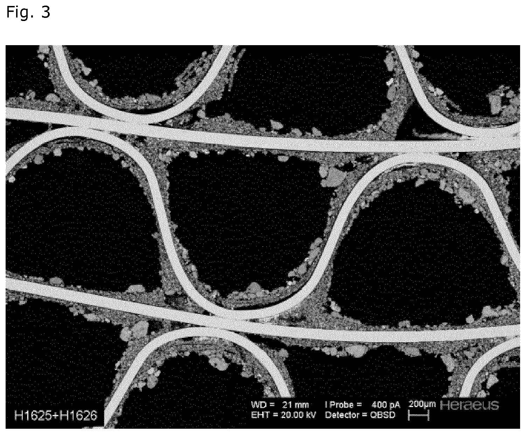

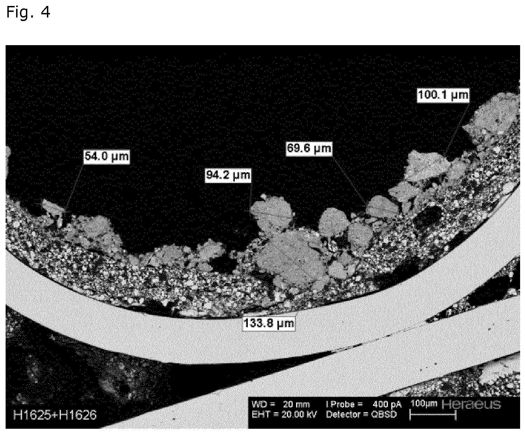

Beträgt die Teilchengröße d90 mehr als 35 µm, so ist eine Verwendung in einem Katalysator nicht mehr vorteilhaft. Bei der Beschichtung eines Katalysatorträgers mit einer Zusammensetzung mit einer entsprechend großen Teilchengröße, liegen die Teilchen nicht mehr verzahnt miteinander vor. Vielmehr kommt es zu einer Ausbildung von Agglomeraten. Fig. 3 zeigt eine Rasterelektronenmikroskopische (REM)-Aufnahme, bei der die zweite Schicht Teilchengrößen d90 von mehr als 35 µm aufweist. In Fig. 4 ist die Teilchengröße der einzelnen Partikel in der zweiten Schicht erkennbar. Fig. 4 stellt einen Ausschnitt aus Fig. 3 dar.

Während des erfindungsgemäßen Verfahrens werden die Bestandteile der Zusammensetzung miteinander gemischt und können dann beispielsweise in einem Katalysator verwendet werden. Ein Mahlen der Mischung, wie es im Stand der Technik beschrieben ist, ist erfindungsgemäß nicht erforderlich. Es hat sich überraschenderweise gezeigt, dass die Abgasbehandlung mit der mittels des erfindungsgemäßen Verfahrens bereitgestellten Zusammensetzung aus nichtgemahlenen Bestandteilen gegenüber bekannten gemahlenen Bestandteilen verbessert werden konnte.

Die Verwendung von Platin und/oder Rhodium in der Zusammensetzung ermöglicht den schnellen Ein- und Ausbau von Sauerstoff im Sauerstoffspeichermaterial. Kommt das zu behandelnde Abgas mit der mittels des erfindungsgemäßen Verfahrens bereitgestellten Zusammensetzung in Kontakt, so können Stickoxide rasch reduziert werden, indem der Sauerstoff aus dem Reaktionsgleichgewicht entfernt und im Sauerstoffspeicher gespeichert wird.

Die Verwendung von Palladium hingegen sorgt für einen langsameren Ein- und Ausbau von Sauerstoff im Sauerstoffspeichermaterial. Durch den Einsatz von Palladium wird jedoch die Sauerstoffspeicherkapazität des Sauerstoffspeichers erhöht.

Es handelt sich bei dem Sauerstoffspeichermaterial um ein Cer-Zirkonium-Oxid. Dabei kann es sich hierbei im Sinne der vorliegenden Erfindung sowohl um ein Mischoxid aus Cer und Zirkonium, als auch um eine Mischung der beiden Oxide Ceroxid CeO₂ und Zirkonoxid ZrO₂ handeln. Die katalytisch wirksame Zusammensetzung weist weiterhin gamma-Aluminiumoxid (g-Al₂O₃), insbesondere mit Lanthanoxid La₂O₃ dotiertes gamma-Aluminiumoxid auf. Bei der Verwendung der mittels des erfindungsgemäßen Verfahrens bereitgestellten Zusammensetzung in einem Katalysator beeinflusst das g-Al₂O₃ die Haftung der Zusammensetzung auf der Oberfläche an der Innenseite des Trägers.

Das g-Al₂O₃ besitzt bevorzugt eine Teilchengröße d90 im Bereich von 10 µm bis 35 µm, bevorzugt im Bereich von 15 µm bis 30 µm, besonders bevorzugt im Bereich von 19 µm bis 24 µm. Auch dieses kann ungemahlen zu der mittels des erfindungsgemäßen Verfahrens bereitgestellten Zusammensetzung beigemengt werden. Auch hier ist ein Mahlschritt nicht erforderlich. Im Gegenteil, es hat sich überraschenderweise gezeigt, dass die Abgasbehandlung mit der Zusammensetzung aus ungemahlenen Bestandteilen gegenüber einer Zusammensetzung mit gemahlenen Bestandteilen verbessert werden konnte.

Bei dem γ-Al₂O₃ ist eine große BET-Oberfläche bevorzugt. Die BET-Oberfläche von γ-Al₂O₃ liegt üblicherweise bei etwa 200 m²/g. Bei hohen Temperaturen, wie sie beispielsweise beim Sintern bei der Herstellung eines Katalysators oder auch im Betrieb auftreten, sinkt dieser Wert auf etwa 40 bis 50 m²/g. Durch die Dotierung mit Lanthanoxid wird eine höhere thermische Stabilität von γ-Al₂O₃ erreicht. Die BET-Oberfläche von dotiertem γ-Al₂O₃ liegt auch nach thermischer Behandlung noch in einem Bereich von über 70 m²/g, besonders bevorzugt bei 90 m²/g.

Die BET-Oberfläche wird auch spezifische Oberfläche genannt und kann nach der im Stand der Technik bekannten BET-Methode bestimmt werden. Für die Messung wird ein Gas, häufig Stickstoff, über das zu untersuchende Material geleitet. Mit Hilfe der BET-Gleichung wird aus einer adsorbierten Gasmenge die Menge an Adsorbat berechnet, die auf der Oberfläche des zu untersuchenden Gegenstandes eine Schicht, die sogenannte Monoschicht, ausbildet. Die Anzahl der Mol in der Monoschicht Vm multipliziert mit der Avogadrozahl N_{A} und dem Platzbedarf eines Gasmoleküls (Stickstoff: aₘ = 0,162 nm²) ergibt die BET-Oberfläche.

Die katalytisch wirksame Zusammensetzung umfasst das Sauerstoffspeichermaterial, wenigstens ein Edelmetall und Aluminiumoxid. Das Bereitstellen der Zusammensetzung umfasst die folgenden Schritte:
i. Einbringen des Sauerstoffspeichermaterials in Wasser,
ii. Zugabe von Edelmetall oder Edelmetallen in Form eines ihrer Salze in Lösung und
iii. Einbringen von Aluminiumoxid in die in Schritt (ii) erhaltene Aufschlämmung.

Dabei wird in Schritt (ii) währen der Zugabe der Lösung der pH-Wert bevorzugt in einem Bereich von 4 bis 5 gehalten. Dies erfolgt mit üblichen, im Stand der Technik bekannten basischen Lösungsmitteln. Bevorzugt erfolgt die Einstellung des pH-Wertes mit Ammoniak NH₃. Dies führt zu einem guten Aufziehen des Edelmetalls/der Edelmetalle auf das Sauerstoffspeichermaterial. Überraschenderweise hat sich gezeigt, dass die Light-off-Temperatur des Mehrschichtkatalysators (4) bei Verwendung von Ammoniak zur Einstellung des pH-Wertes bei allen Emissionswerten (Kohlenstoffmonoxid CO, Kohlenwasserstoffe HC und Stickoxide NOₓ) besser ist, als bei der Verwendung anderer Basen, wie aus der nachfolgenden Tabelle 1 hervorgeht.

**Tabelle 1:**

| **Base** | **Light-off-Temperatur [°C]** | | |
|---|---|---|---|
| | **CO** | **HC** | **NOₓ** |
| NH₃ | 175 | 179 | 180 |
| Ethanolamin | 205 | 208 | 209 |
| Tetraethylammoniumhydroxid (TEAOH) | 194 | 197 | 195 |
| Ethanolamin + Zitronensäure | 184 | 186 | 185 |

Die mittels des erfindungsgemäßen Verfahrens bereitgestellte Zusammensetzung kann in einem Mehrschichtkatalysator (4) für die Abgasnachbehandlung von Verbrennungsmotoren verwendet werden. Ein entsprechender Mehrschichtkatalysator (4) für die Abgasnachbehandlung von Verbrennungsabgasen umfasst eine Trägerstruktur (3), die Kanäle zur Durchführung von Gasen aufweist, wobei zumindest ein Teil der Kanäle einen in Strömungsrichtung der Abgase stromaufwärts befindlichen Abgaseinlass und einen stromabwärts befindlichen Gasauslass aufweist, und wobei zumindest ein Teil der Kanäle eine wenigstens auf der Innenseite aufgebrachte erste Schicht (1), und eine wenigstens teilweise die erste Schicht (1) bedeckende zweite Schicht (2) aufweist, wobei die erste Schicht (1) und die zweite Schicht (2) eine mittels des erfindungsgemäßen Verfahrens bereitgestellte katalytisch wirksame Zusammensetzung gemäß einem der Ansprüche 1 bis 4 umfassen.

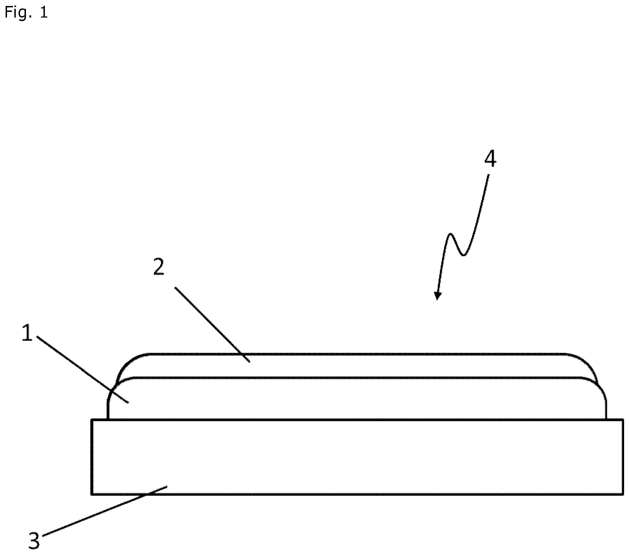

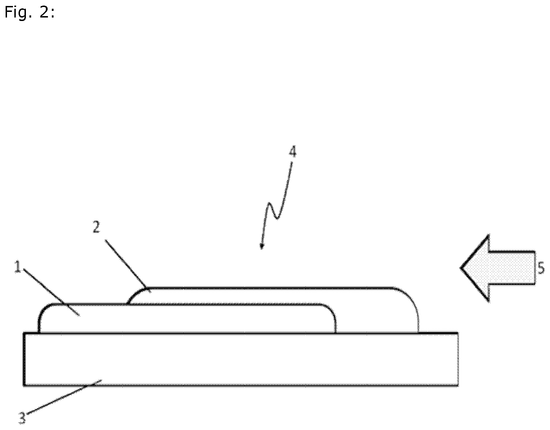

Fig. 1 zeigt schematisch den Aufbau eines Mehrschichtkatalysators (4) mit der Trägerstruktur (3), der ersten Schicht (1) und der zweiten Schicht (2). Fig. 2 zeigt eine bevorzugte Ausführungsform. Hier stellt der Pfeil (5) die Strömungsrichtung des zu behandelnden Abgases dar. Wird im Folgenden die erste Schicht (1) beschrieben, so ist hierunter die erste katalytisch wirksame Schicht (1) zu verstehen. Gleiches gilt für die zweite Schicht (2), welche die zweite katalytisch wirksame Schicht (2) bezeichnet. Mit "Zusammensetzung der ersten Schicht (1)" wird die mittels des erfindungsgemäßen Verfahrens bereitgestellte katalytisch wirksame Zusammensetzung, welche als erste Schicht (1) auf die Trägerstruktur aufgebracht wird, bezeichnet. Mit "Zusammensetzung der zweiten Schicht (2)" wird die mittels des erfindungsgemäßen Verfahrens bereitgestellte katalytisch wirksame Zusammensetzung, welche als zweite Schicht (2) auf die Trägerstruktur aufgebracht wird, bezeichnet.

Es hat sich nun gezeigt, dass die Gesamtschichtdicke aus erster Schicht (1) und zweiter Schicht (2) bevorzugt 100 µm oder weniger, besonders bevorzugt 50 µm oder weniger beträgt. Bei einer solchen Gesamtschichtdicke kann das Abgas ungehindert durch den Katalysator strömen. Dabei kommt das Abgas immer noch ausreichend in Kontakt mit den katalytisch aktiven Zusammensetzungen der einzelnen Schichten. Die Gesamtschichtdicke ist die durchschnittliche Schichtdicke an der Wand der Trägerstruktur (3). Dabei werden nur die ebenen Flächen einer Wand bei der Bestimmung der Schichtdicke berücksichtigt. Bereiche, an denen zwei oder mehr Wände aufeinanderstoßen oder sich berühren, wodurch es zur Ausbildung von Hohlräumen mit einer Dreieck-ähnlichen Form kommt, finden bei der Bestimmung der Gesamtschichtdicke keine Berücksichtigung.

Bevorzugt weisen die erste Schicht (1) und die zweite Schicht (2) voneinander unterschiedliche mittels des erfindungsgemäßen Verfahrens bereitgestellte katalytisch wirksame Zusammensetzungen auf. Im Mehrschichtkatalysator bedeckt die zweite Schicht (2) die erste Schicht (1) wenigstens teilweise. Vorzugsweise bedeckt die zweite Schicht (2) die Oberfläche der ersten Schicht (1) zu wenigstens 50%, vorzugsweise zu wenigstens 60 %, weiter vorzugsweise zu wenigstens 75 %, insbesondere zu wenigstens 85 %, speziell zu wenigstens 90 % oder 95 %. Strömt nun das zu behandelnde Abgas über die beiden Schichten, so kommt es zumindest in den überlappenden Bereichen zunächst mit der zweiten Schicht (2) in Kontakt.

In einer bevorzugten Ausführungsform handelt es sich um einen Mehrschichtkatalysator (4) für die Abgasnachbehandlung von Verbrennungsabgasen, umfassend eine Trägerstruktur, die Kanäle zur Durchführung von Gasen aufweist, wobei zumindest ein Teil der Kanäle einen in Strömungsrichtung der Abgase stromaufwärts befindlichen Abgaseinlass und einen stromabwärts befindlichen Gasauslass aufweist, und wobei zumindest ein Teil der Kanäle eine wenigstens auf der Innenseite aufgebrachte erste katalytisch wirksame Schicht (1), welche eine erste mittels des erfindungsgemäßen Verfahrens bereitgestellte katalytisch wirksame Zusammensetzung umfasst, und eine wenigstens teilweise die erste Schicht bedeckende zweite katalytisch wirksame Schicht (2), welche eine zweite mittels des erfindungsgemäßen Verfahrens bereitgestellte katalytisch wirksame Zusammensetzung umfasst, aufweist, wobei die erste mittels des erfindungsgemäßen Verfahrens bereitgestellte katalytisch wirksame Zusammensetzung von der zweiten mittels des erfindungsgemäßen Verfahrens bereitgestellten katalytisch wirksamen Zusammensetzung verschieden ist.

Beide Zusammensetzungen besitzen jedoch eine Teilchengröße d90 im Bereich von 10 µm bis 35 µm, bevorzugt im Bereich von 15 µm bis 30 µm, besonders bevorzugt im Bereich von 19 µm bis 24 µm, bevorzugt eine Teilchengröße d50 im Bereich von 2,5 µm bis 11,5 µm, bevorzugt im Bereich von 4 µm bis 10 µm, besonders bevorzugt im Bereich von 5,5 µm bis 8,5 µm und weiterhin insbesondere bevorzugt eine Teilchengröße d10 im Bereich von 1 µm bis 4 µm, bevorzugt im Bereich von 1 µm bis 2 µm, besonders bevorzugt im Bereich von 1 µm bis 1,8 µm.

Besonders bevorzugt bestehen die erste Schicht (1) und die zweite Schicht (2) aus den jeweiligen Zusammensetzungen.

Um die Abgasbehandlung zu verbessern, umfasst die Zusammensetzung der zweiten Schicht (2) vorzugsweise Platin und/oder Rhodium. Die Zusammensetzung der ersten Schicht (1) kann Palladium umfassen. Es hat sich gezeigt, dass die Wirkung der Edelmetalle bei der Umsetzung der Abgase besonders hoch ist, wenn diese in getrennten Schichten vorliegen. Insbesondere Palladium sollte von Platin und Rhodium getrennt vorliegen. Im Betrieb erwärmt sich der Katalysator. Hierdurch kann es zur Ausbildung von Aggregaten der Edelmetalle kommen. Insbesondere Palladium neigt zur Ausbildung von Aggregaten. Liegt Palladium gemeinsam mit Platin und/oder Rhodium in einer Schicht vor, so kommt es zur Ausbildung von Mischaggregaten, welche eine gegenüber den reinen Edelmetallen deutlich verringerte katalytische Aktivität aufweisen.

In einer bevorzugten Ausführungsform weist die erste Schicht (1) auf Grund von Palladium in der katalytisch wirksamen Zusammensetzung eine größere Sauerstoffspeicherkapazität auf als die zweite Schicht (2), welche eine Zusammensetzung, enthaltend Platin und/oder Rhodium, aufweist. Bezogen auf eine Sauerstoffspeicherkapazität der ersten Schicht (1) von 100%, beträgt die Sauerstoffspeicherkapazität der zweiten Schicht bevorzugt 50% bis 80%, besonders bevorzugt 70%. Dies entspricht einer 1,25 bis 2-fach, insbesondere 1,4-fach erhöhten Sauerstoffspeicherkapazität der ersten Schicht (1) gegenüber der zweiten Schicht (2).

So weist in einem Mehrschichtkatalysator (4) in einer möglichen Ausführungsform die erste Schicht (1) ein Sauerstoffspeichermaterial mit einer Sauerstoffspeicherkapazität von 800 µmol CO/g auf, während das Sauerstoffspeichermaterial der zweiten Schicht (2) eine Sauerstoffspeicherkapazität von 511 µmol CO/g aufweist. Die Sauerstoffspeicherkapazität gibt die gespeicherte Menge an CO in µmol (micromol) bezogen auf die Beschichtungsmenge der jeweiligen Schicht in Gramm an. Die erste Schicht (1) umfasst in dieser Ausführungsform, ein Sauerstoffspeichermaterial, welches 75 Gew.-% CeO₂ und 25 Gew.-% ZrO₂ aufweist. Das Sauerstoffspeichermaterial der zweiten Schicht (2) umfasst in dieser Ausführungsform ein Sauerstoffspeichermaterial aus 58 Gew.-% CeO₂ und 42 Gew.-% ZrO₂. Überraschenderweise hat sich gezeigt, dass eine größere Sauerstoffspeicherkapazität in einem Mehrschichtkatalysator (4) den Ausgleich größerer Lambdaschwankungen ermöglicht.

Die katalytisch wirksame Zusammensetzung der ersten Schicht (1) weist Palladium bevorzugt in einem Anteil von 0,05 Gew.-% bis 10,00 Gew.-%, insbesondere bevorzugt 0,10 Gew.-% bis 10,00 Gew.-%, ganz besonders bevorzugt 0,50 Gew.-% bis 5,00 Gew.-%, bezogen auf eine Gesamtzusammensetzung von 100 Gew.-% der ersten Schicht (1), auf.

Die katalytisch wirksame Zusammensetzung der zweiten Schicht (2) weist Platin und/oder Rhodium bevorzugt in einem Anteil von 0,05 Gew.-% bis 2,00 Gew.-% insbesondere bevorzugt 0,1 Gew.-% bis 1,0 Gew.-%, ganz besonders bevorzugt 0,2 Gew.-% bezogen auf eine Gesamtzusammensetzung von 100 Gew.-% der zweiten Schicht (2), auf. Der Anteil an Platin und/oder Rhodium bezieht sich auf den gesamten Stoffinhalt der zweiten Schicht (2).

Die zweite Schicht (2) kann nur Platin, nur Rhodium oder Platin und Rhodium aufweisen. Liegen sowohl Platin als auch Rhodium vor, so liegt das Verhältnis von Platin zu Rhodium bevorzugt im Bereich von 1:5 bis 5:1, besonders bevorzugt 2:3.

Die katalytisch wirksame Zusammensetzung der zweiten Schicht (2) umfasst ein Sauerstoffspeichermaterial, welches ein oder mehrere Metalle, ausgewählt aus der Gruppe der seltenen Erden, aufweist. Bevorzugt handelt es sich um die Oxide der seltenen Erdmetalle, welche die Zusammensetzung der zweiten Schicht (2) insbesondere in einem Anteil im Bereich von 70 Gew.-% bis 90 Gew.-%, bevorzugt von 90 Gew.-% bezogen auf eine Gesamtzusammensetzung von 100 Gew.-% der zweiten Schicht (2) umfasst. Der Anteil an seltenen Erdmetallen als Oxid bezieht sich auf den gesamten Stoffinhalt der zweiten Schicht (2).

Das Sauerstoffspeichermaterial der Zusammensetzung der zweiten Schicht (2) umfasst ein Cer-Zirkonium-Oxid (CeₓZr_{y}O_{z}). Dabei handelt es sich bevorzugt um ein Cer-reiches Cer-Zirkonium-Oxid, bei welchem der Anteil an Cer-Oxid CeO₂ bezogen auf das gesamte Oxid wenigstens 50 Gew.-% beträgt und der Anteil an Zirkonium-Oxid ZrO₂ geringer ist als der Anteil an Cer-Oxid CeO₂. Das Sauerstoffspeichermaterial kann einen Anteil im Bereich von 50 Gew.-% bis 80 Gew.-% CeO₂ und einen Anteil im Bereich von 10 Gew.-% bis 40 Gew.-% ZrO₂, insbesondere von 60 Gew.-% CeO₂ und von 30 Gew.-% ZrO₂ umfassen, jeweils bezogen auf eine Gesamtzusammensetzung von 100 Gew.-% der zweiten Schicht (2), also den gesamten Stoffgehalt der zweiten Schicht (2).

Die thermische Stabilität des Sauerstoffspeichermaterials ist für die Umsatzrate, die durch den Mehrschichtkatalysator (4) erreicht wird, relevant. Bei dem Sauerstoffspeichermaterial handelt es sich um ein poröses Material. Auch reines Cer-Oxid weist eine poröse Struktur auf. Auf das Sauerstoffspeichermaterial wird das Edelmetall aufgebracht. Im Betrieb strömt nun das Abgas auf das Sauerstoffspeichermaterial der katalytisch wirksamen Schicht (1, 2). Durch die poröse Oberfläche kommt es zu Turbulenzen in den Strömungen, was zu einem verbesserten Kontakt zwischen katalytisch wirksamer Schicht (1, 2) und den zu behandelnden Abgasen führt.

Ist die Porengröße des Sauerstoffspeichermaterials zu klein, strömt das Abgas entlang der Oberflächen des Sauerstoffspeichermaterials. Das katalytisch wirksame Edelmetall befindet sich jedoch nicht nur auf der Oberfläche sondern auch im Inneren des Sauerstoffspeichermaterials in dessen Poren. Dieses im Inneren befindliche Edelmetall steht bei zu kleiner Porengröße im Betrieb für die Behandlung des Abgases nicht zur Verfügung. Dabei sind vor allem das Porenvolumen und der Porenradius sowie die Größe der Öffnung der Poren entscheidend. Diese müssen sowohl bei der Herstellung als auch in Betrieb wenigstens teilweise erhalten bleiben und eine Mindestgröße aufweisen.

Im Cer-Zirkonium-Oxid wird die Struktur des reinen Cer-Oxids durch das Zirkonium-Oxid aufgebrochen. Dies führt zu einer Änderung des Porenvolumens und des Porenradius des Sauerstoffspeichermaterials. Insbesondere wird die thermische Stabilität der Struktur erhöht. Auch im Betrieb bei Temperaturen von über 500 °C bleiben die Poren stabil. Im Betrieb steht daher die vollständige Menge an vorhandenem Edelmetall der Reaktion mit dem Abgas zur Verfügung. Es hat sich gezeigt, dass ein Anteil von wenigstens 10 Gew.-% Zirkonium-Oxid im Sauerstoffspeichermaterial für eine ausreichende, thermische Stabilität sorgt. Ein Anteil an Zirkonium-Oxid von über 45 Gew.-% führt zu einer Verringerung der Sauerstoffspeicherkapazität des Sauerstoffspeichermaterials.

Bei der Herstellung eines Mehrschichtkatalysators und/oder im Betrieb ist ein Katalysator hohen Temperaturbelastungen ausgesetzt. Um die Stabilität der Porenstruktur der Sauerstoffspeichermaterialien zu bestimmen, werden diese für eine Dauer von etwa 3 bis 8 Stunden einer Temperatur von 1000 °C ausgesetzt. Nach dieser Temperaturbehandlung wird die BET-Oberfläche bestimmt. Sauerstoffspeichermaterialien, welche aus Cer-Oxid und Zirkonium-Oxid bestehen weisen nach einer Temperaturbehandlung von 1000 °C eine BET Oberfläche von 20 m²/g oder weniger auf.

Es hat sich jedoch gezeigt, dass sich die BET-Oberfläche der Sauerstoffspeichermaterialien einstellen lässt. Um eine größere BET-Oberfläche von 30 m²/g oder mehr nach einer Temperaturbehandlung bei 1000 °C zu erhalten, weist das Sauerstoffspeichermaterial der katalytisch wirksamen Zusammensetzung der zweiten Schicht (2) bevorzugt weiterhin ein oder mehrere Metalle ausgewählt aus der Gruppe bestehend aus Neodym, Praseodym, Lanthan und Hafnium auf. Die Metalle liegen bevorzugt in Form ihrer Oxide vor. Dabei kann der Anteil der jeweiligen Metalloxide 2 Gew.-% bis 10 Gew.-%, bevorzugt 3 Gew.-% bis 7 Gew.-% bezogen auf 100 Gew.-% des Sauerstoffspeichermaterials betragen.

Die Dotierung des Sauerstoffmaterials in dem genannten Bereich führt zu einer verbesserten thermischen Stabilität des Sauerstoffspeichermaterials. Liegt der Anteil darunter, ist kein Effekt sichtbar. Bei höheren Anteilen von über 10 Gew.-% wird die Stabilität nicht weiter erhöht. Weiterhin wird durch die Zugabe von Praseodym, Lanthan, Neodym und/oder Hafnium der Ein- und Ausbau von Sauerstoff in das Sauerstoffspeichermaterial beschleunigt.

In der nachfolgenden Tabelle 2 ist die jeweilige BET-Oberfläche unterschiedlicher Sauerstoffspeichermaterialien nach Temperaturbehandlung bei 1000 °C gezeigt. Die Sauerstoffspeichermaterialien Nr. 1 und Nr. 5 bestehen aus CeO₂ und ZrO₂. Diese weisen eine BET-Oberfläche von weniger als 20 m²/g auf. Durch die Dotierung mit Oxiden von Praseodym, Lanthan, Neodym und/oder Hafnium wird die BET-Oberfläche nach Temperaturbehandlung vergrößert. Die thermische Stabilität der Sauerstoffspeichermaterialien wird durch die Dotierung demnach erhöht.

**Tabelle 2:**

| Sauerstoffspeichermaterial | CeO₂ [Gew.%] | ZrO₂ Gew.%] | Nd₂O₃ Gew.%] | La₂O₃ Gew.%] | Y₂O₃ Gew.%] | Pr₆O₁₁ Gew.%] | BET [m²/g] |
|---|---|---|---|---|---|---|---|
| Nr. 1 | 70 | 30 | | | | | 17 |
| Nr. 2 | 56 | 39 | 5 | | | | 28 |
| Nr. 3 | 65 | 27 | | 8 | | | 30 |
| Nr. 4 | 60 | 25 | 5 | 2 | 8 | | 33 |
| Nr. 5 | 58 | 42 | | | | | 16 |
| Nr. 6 | 60 | 30 | | 3 | | 7 | 49 |
| Nr. 7 | 68 | 24 | | 5 | | 3 | 17 |

Die Dotierung des Sauerstoffspeichermaterials der zweiten Schicht (2) mit Oxiden von Praseodym, Lanthan, Neodym und/oder Hafnium führt zu einer Verringerung der Sauerstoffspeicherkapazität. Eine erfindungsgemäß bereitgestellte katalytisch wirksame Schicht, welche ein Sauerstoffspeichermaterial, welches aus 75 Gew.-% CeO₂ und 25 Gew.-% ZrO₂ besteht, und Palladium umfasst, weist eine Sauerstoffspeicherkapazität von etwa 800 µmol CO/g auf. Im Gegensatz hierzu weist ein Sauerstoffspeichermaterial, welches ausschließlich aus Cer-Oxid besteht eine Sauerstoffspeicherkapazität von etwa 730 µmol CO/g auf.

Ersetzt man nun das Sauerstoffspeichermaterial durch ein dotiertes Cer-Zirkonium-Oxid, sinkt die Sauerstoffspeicherkapazität. Eine Dotierung des Sauerstoffspeichermaterials mit 4 Gew.-% Lanthanoxid führt zu einer Sauerstoffspeicherkapazität von 710 µmol CO/g, eine Dotierung mit 12 Gew.-% Lanthanoxid zu einer Kapazität von etwa 600 µmol CO/g.

Mit der Menge an Neodym, Praseodym, Lanthan und Hafnium, welche dem Sauerstoffspeichermaterial der zweiten Schicht (2) zugegeben wird, lassen sich somit die Eigenschaften der katalytisch aktiven Schicht einstellen. Durch diese Materialien können die thermische Stabilität, die Sauerstoffspeicherkapazität und die Geschwindigkeit des Sauerstoff Ein- und Ausbaus beeinflusst und nach Bedarf eingestellt werden.

Die Sauerstoffspeicherkapazität eines Materials kann mittels CO Chemisorption bestimmt werden. Hierzu wird die zu analysierende Probe zunächst bei einer bestimmten Temperatur (350 °C) mit Sauerstoff vollständig oxidiert. Anschließend wird die Probe so lange mit CO bepulst, bis kein Sauerstoff mehr in der Probe zur Oxidation des CO vorhanden ist. Bepulsen bedeutet, dass CO pulsweise dosiert wird. Das durch die zu analysierende Probe strömende Gas wird detektiert. Durch Analyse der Fläche unter den durch die Detektion erhaltenen Peaks kann dann die Menge des umgesetzten CO bestimmt werden, welches ein Maß für die Sauerstoffspeicherkapazität darstellt. Die Sauerstoffspeicherkapazität wird daher in µmol CO pro Gramm katalytisch wirksamer Zusammensetzung angegeben.

Die katalytisch wirksame Zusammensetzung der ersten Schicht (1) umfasst bevorzugt Palladium. Weiterhin umfasst sie ein Sauerstoffspeichermaterial, welches ein oder mehrere Metalle ausgewählt aus der Gruppe der seltenen Erdmetalle aufweist. Es handelt sich bei dem Sauerstoffspeichermaterial um ein Cer-Zirkonium-Oxid (CeₓZr_{y}O_{z}). Dieses umfasst bevorzugt 50 Gew.-% bis 80 Gew.-% CeO₂ und 10 Gew.-% bis 40 Gew.-% ZrO₂, insbesondere bevorzugt 60 Gew.-% CeO₂ und 30 Gew.-% ZrO₂ bezogen auf eine Gesamtzusammensetzung von 100 Gew.-% der ersten Schicht (1).

Die Zugabe von ZrO₂ zu CeO₂ führt auch hier zu einer verbesserten thermischen Stabilität und somit zu einer höheren Aktivität und längeren Lebensdauer des Mehrschichtkatalysators (4), wie hinsichtlich des Sauerstoffspeichermaterials der zweiten Schicht (2) erläutert.

Bevorzugt umfasst die katalytisch wirksame Zusammensetzung der ersten Schicht (1) das Sauerstoffspeichermaterial in einem Anteil von 40 Gew.-% bis 90 Gew.-%, besonders bevorzugt in einem Anteil von 70 Gew.-% bezogen auf eine Gesamtzusammensetzung von 100 Gew.-% der ersten Schicht (1). Der Anteil von Palladium in dieser Schicht liegt bevorzugt im Bereich von 0,5 Gew.-% bis 5 Gew.-%.

Die Beladung der ersten (1) und/oder der zweiten Schicht (2) mit der jeweiligen katalytisch wirksamen Zusammensetzung liegt bevorzugt im Bereich von 40 g/L bis 150 g/L, bevorzugt 75 g/L. Die Beladung gibt die Menge der aufgetragenen Zusammensetzung bezogen auf das Leervolumen des Katalysators an.

Bevorzugt umfasst die Zusammensetzung der ersten Schicht (1) ein Sauerstoffspeichermaterial und die Zusammensetzung der zweiten Schicht (2) ein Sauerstoffspeichermaterial, wobei das Sauerstoffspeichermaterial der Zusammensetzung der ersten Schicht (1) von dem Sauerstoffspeichermaterial der Zusammensetzung der zweiten Schicht (2) verschieden ist. Dabei können die Zusammensetzung der ersten Schicht (1) und/oder die Zusammensetzung der zweiten Schicht (2) weiterhin gamma-Aluminiumoxid, welches vorzugsweise mit Lanthanoxid dotiert ist, aufweisen.

Weist die Zusammensetzung der ersten Schicht (1) gamma-Aluminiumoxid (γ-Al₂O₃) auf, so beträgt der Anteil von γ-Al₂O₃ bevorzugt 10 Gew.-% bis 60 Gew.-%, besonders bevorzugt 30 Gew.-% bezogen auf 100 Gew.-% Gesamtzusammensetzung der ersten Schicht (1). Weist die Zusammensetzung der zweiten Schicht (2) gamma-Aluminiumoxid (γ-Al₂O₃) auf, so beträgt der Anteil von γ-Al₂O₃ bevorzugt 10 Gew.-% bis 30 Gew.-%, besonders bevorzugt 10 Gew.-% bezogen auf 100 Gew.-% Gesamtzusammensetzung der zweiten Schicht (2).

Der Anteil an γ-Al₂O₃ in der katalytisch wirksamen Schicht beeinflusst die Haftung der Zusammensetzung auf der Oberfläche des Innenseite des Trägers. Die erste Schicht (1) ist vollständig auf dem Trägermaterial des Mehrschichtkatalysators (4) aufgetragen, wohingegegen die zweite Schicht (2) teilweise auf der ersten Schicht (1) und teilweise auf dem Trägermaterial aufgetragen ist. Daher weist die Zusammensetzung der ersten Schicht (1) bevorzugt einen höheren Anteil an γ-Al₂O₃ auf als die Zusammensetzung der zweiten Schicht (2). Übersteigt der Anteil an γ-Al₂O₃ in der Zusammensetzung der zweiten Schicht (2) 30 Gew.-%, wird der NOₓ-Umsatz der Schicht schlechter. Mit steigendem Anteil an Sauerstoffspeichermaterial an der zweiten Schicht, verbessert sich somit der NOₓ-Umsatz des Mehrschichtkatalysators (4). Halbiert man in einem Katalysator die Menge an eingesetztem Sauerstoffspeichermaterial und ersetzt diese durch γ-Al₂O₃, so steigt die NOₓ-Emission um etwa 25 bis 30 % an. Verwendet man Sauerstoffspeichermaterialien mit γ-Al₂O₃-Anteilen von 30 Gew.-% oder weniger, werden Stickoxide (NOx) in einer Menge von etwa 0,0099 g/km (Gramm NOx pro Kilometer Fahrtstrecke) ausgestoßen. Halbiert man nun die Menge an Sauerstoffspeichermaterialien, so erhöht sich der Wert auf 0,125 g/km.

Vorzugsweise handelt es sich bei dem γ-Al₂O₃ um mit Lanthanoxid La₂O₃ dotiertes Aluminiumoxid. Der Gehalt von La₂O₃ bezogen auf die Menge an Al₂O₃ liegt bevorzugt im Bereich von 2 Gew.-% bis 4 Gew.-%, besonders bevorzugt bei 3 Gew.-%.

Bei dem γ-Al₂O₃ ist eine große BET-Oberfläche bevorzugt. Die BET-Oberfläche von γ-Al₂O₃ liegt üblicherweise bei etwa 200 m²/g. Bei hohen Temperaturen, wie sie beispielsweise beim Sintern bei der Herstellung eines Katalysators oder auch im Betrieb auftreten, sinkt dieser Wert auf etwa 40 bis 50 m²/g. Durch die Dotierung mit Lanthanoxid wird eine höhere thermische Stabilität von γ-Al₂O₃ erreicht. Die BET-Oberfläche von dotiertem γ-Al₂O₃ liegt auch nach thermischer Behandlung noch in einem Bereich von über 70 m²/g, besonders bevorzugt bei 90 m²/g.

Bevorzugt umfasst ein Mehrschichtkatalysator somit wenigstens eine erste katalytisch wirksame Zusammensetzung in einer ersten Schicht (1), welche ein Sauerstoffspeichermaterial, mit La₂O₃ dotiertes γ-Al₂O₃ und Palladium umfasst, und eine zweite katalytisch wirksame Zusammensetzung in einer zweiten Schicht (2), welche ein Sauerstoffspeichermaterial, mit La₂O₃ dotiertes γ-Al₂O₃ und Platin und/oder Rhodium umfasst.

Aus dem Stand der Technik ist bekannt, dass Rhodium, welches sich auf γ-Al₂O₃ befindet, für die eigentliche Katalyse-Reaktion nicht oder nur eingeschränkt zur Verfügung steht. Daher befinden sich bevorzugt Platin und/oder Rhodium in der Zusammensetzung der zweiten Schicht (2) zumindest fast ausschließlich auf dem Sauerstoffspeichermaterial. "Fast ausschließlich" im Sinne der vorliegenden Erfindung bedeutet, dass das oder die Edelmetalle zu wenigstens 90%, bevorzugt zu wenigstens 95%, insbesondere zu wenigstens 98%, speziell zu 99% auf dem Sauerstoffspeichermaterial aufgebracht ist.

Überraschenderweise hat sich nun gezeigt, dass eine Balance zwischen geringer Light-Off-Temperatur und gleichzeitig großem Lambdafenster erreicht werden kann, wenn das Palladium in der Zusammensetzung der ersten Schicht (1) sich nicht fast ausschließlich auf dem Sauerstoffspeichermaterial befindet. In einer bevorzugten Ausführungsform befindet sich ein Anteil von 30 Gew.-% bis 40 Gew.-%, insbesondere 30 Gew.-% des Palladiums auf dem γ-Al₂O₃ , während sich 60 Gew.-% bis 70 Gew.-%, insbesondere 70 Gew.-% des Palladiums auf dem Sauerstoffspeichermaterial befinden. Ist das Palladium in der Zusammensetzung der ersten Schicht (1) fast ausschließlich auf dem Sauerstoffspeichermaterial aufgetragen, so wirkt sich dies nachteilig auf das Light-Off-Verhalten des Mehrschichtkatalysators (4) aus.

Bevorzugt ist die erste Schicht (1) im Wesentlichen frei von Platin und/oder Rhodium. Vorzugsweise ist die zweite Schicht (2) im Wesentlichen frei von Palladium. Im "Wesentlichen frei" im Sinne der vorliegenden Anmeldung bedeutet, dass das Gewichtsverhältnis von Palladium in der zweiten Schicht (2) zu Palladium in der ersten Schicht (1) bevorzugt kleiner als 1:10, vorzugsweise kleiner 1:50, insbesondere kleiner 1:100 oder kleiner 1:500, speziell 0 ist, und dass das Gewichtsverhältnis von Platin und/oder Rhodium in der ersten Schicht (1) zu Platin und/oder Rhodium in der zweiten Schicht (2) ist bevorzugt kleiner als 1:10, vorzugsweise kleiner 1:50, insbesondere kleiner 1:100 oder kleiner 1:500, speziell 0.

In der nachfolgenden Tabelle 3 sind die Konzentrationen an Abgasen (Kohlenstoffmonoxid CO, Kohlenwasserstoff HC, Stickoxide NOₓ und Kohlenstoffdioxid CO₂) dargestellt, nachdem die Abgase über einen Mehrschichtkatalysator geleitet wurden.

**Tabelle 3:**

| Beispiel Nr. | Motorbedin gungen | Konzentration [g/km] | | | | Katalysator | |
|---|---|---|---|---|---|---|---|
| | | CO | HC | NOX | CO2 | 1. Schicht | 2. Schicht |
| 1 | mager | 0,479 | 0,054 | 0,086 | 55,206 | X11007 | X11009 |
| 2 | fett | 0,761 | 0,081 | 0,059 | 69,422 | X11007 | X11009 |

Der Mehrschichtkatalysator weist als erste Schicht (1) die mit X11007 bezeichnete Zusammensetzung auf. Diese weist einen Anteil an Sauerstoffspeichermaterial (60% CeO₂, 30% ZrO₂, 3% La₂O₃ und 7% Pr₆O₁₁) von 8,42 % auf. Der Anteil an Rhodium beträgt 0,05 %, der an Palladium 1,68 %. Der Anteil an mit La₂O₃ dotiertem g-Al₂O₃ (97,1% Al₂O₃, 2,9% La₂O₃) betrug 81,38 %. Darüber hinaus enthält die Zusammensetzung 8,48 % Al₂O₃.

Der Mehrschichtkatalysator weist als zweite Schicht (1) die mit X11009 bezeichnete Zusammensetzung auf. Diese weist einen Anteil an Sauerstoffspeichermaterial (60% CeO₂, 30% ZrO₂, 3% La₂O₃ und 7% Pr₆O₁₁) von 88,10 % auf. Der Anteil an Rhodium und Platin beträgt jeweils 0,09 %. Der Anteil an mit La₂O₃ dotiertem g-Al₂O₃ (97,1% Al₂O₃, 2,9% La₂O₃) beträgt 3,2 %. Darüber hinaus enthält die Zusammensetzung 8,51 % Al₂O₃.

Tabelle 4 zeigt Abgaswerte, welche mit einem unbeschichteten Katalysator (Vergleichsbeispiel 3) beziehungsweise mit Zusammensetzungen beschichtet wurden, welche gemahlen wurden und nicht die erfindungsgemäße Teilchengröße aufweisen (Vergleichsbeispiele 4 und 5).

**Tabelle 4:**

| Vergleichsbeispiel Nr. | Motorbedingungen | Konzentration [g/km] | | | | Katalysator | |
|---|---|---|---|---|---|---|---|
| | | CO | HC | NOX | CO2 | 1. Schicht | 2. Schicht |
| 3 | mager | 0,734 | 0,074 | 0,092 | 70,298 | Rohemission ohne katalytische Beschichtung | |
| 4 | mager | 0,598 | 0,079 | 0,102 | 68,31 | X11006 | X11005 |
| 5 | fett | 1,182 | 0,062 | 0,038 | 70,465 | X11006 | X11005 |

Die Zusammensetzung X11005 aus den Vergleichsbeispielen weist einen Anteil von 8% des Sauerstoffspeichermaterials Nr. 6 aus Tabelle 2 auf und umfasst weiterhin 82% an mit Lanthan-dotiertem Aluminiumoxid (aus 97 Gew.-% Al₂O₃ und 3 Gew.-% La₂O₃). Weiterhin weist die Zusammensetzung X11005 Platin und Rhodium jeweils in einem Anteil von 0,09 Gew.-% auf.

Die Zusammensetzung X11006 weist einen Anteil von 85 % des Sauerstoffspeichermaterials Nr 6 aus Tabelle 2 auf und umfasst weiterhin 6% an mit Lanthan-dotiertem Aluminiumoxid (aus 97 Gew.-% Al₂O₃ und 3 Gew.-% La₂O₃). Der Gehalt an Rhodium beträgt 0,05 Gew.-%, der Gehalt an Palladium 1,61 Gew.-%.

Die Teilchengrößen der Zusammensetzungen X11007 und X11009 sowie der Zusammensetzungen X11006 und X11005 sind in Tabelle 5 dargestellt.

**Tabelle 5:**

| | Zusammensetzung | Schicht | D90 | D50 | D10 |
|---|---|---|---|---|---|
| Beispiele 1 und 2 (ungemahlen) | X11007 | 1 | 22,92 | 6,67 | 1,61 |
| | X11009 | 2 | 23,68 | 6,23 | 1,08 |
| Beispiele 4 und 5 (gemahlen) | X11006 | 1 | 6,46 | 3,17 | 1,06 |
| | X11005 | 2 | 5,66 | 2,35 | 0,55 |

Es hat sich gezeigt, dass mit einem Katalysator, welcher eine gemahlene Zusammensetzung aufweist, die CO₂-Emission insbesondere im fetten Betrieb eines Motors kaum reduziert werden konnte. Dagegen zeigt ein Katalysator deutlich verbesserte Abgaswerte, sowohl im fetten als auch im mageren Betrieb eines Verbrennungsmotors. Die Bestimmung der Abgaswerte in allen Beispielen erfolgte gemäß der Euro-3 Norm (Prüfzyklus: Zyklus der Verordnung ECE R40).

Der Mehrschichtkatalysator (4) umfasst eine Trägerstruktur, die Kanäle zur Durchführung von Gasen aufweist. Auf zumindest einem Teil der Kanäle wird auf die Innenseite eine katalytisch wirksame Zusammensetzung aufgebracht. Dabei kann die Trägerstruktur (3) ein keramisches oder ein metallisches Material umfassen. Bevorzugt umfasst sie ein metallisches Material, insbesondere eine metallische Folie, die Eisen, Chrom und Aluminium umfasst.

Die metallische Folie umfasst bevorzugt einen Anteil von 4 Gew.-% bis 6 Gew.-% Aluminium und einen Anteil von 15 Gew.-% bis 20 Gew.-% Chrom. Liegt der Anteil an Aluminium über 6 Gew.-%, ist die Folie nicht flexibel genug, um in die gewünschte Form der Trägerstruktur gebracht zu werden. Liegt der Anteil an Aluminium bei unter 4% haftet die katalytisch wirksame Schicht nicht darauf. Dabei hat sich gezeigt, dass eine homogene Verteilung des Aluminiums in der Folie wichtig ist. Durch den Einfluss von Wärme und Sauerstoff bildet sich Aluminiumoxid, welches an die Oberfläche der Metallfolie wandert. Ist die Konzentration an Aluminiumoxid an der Oberfläche sehr hoch, bildet sich eine raue Oberflächenstruktur aus. Dies geschieht bei Folien mit einem Anteil an Aluminium von über 6 Gew.-% und kann beispielsweise im Rasterelektronenmikroskop verfolgt werden. Auf einer solch rauen Oberfläche haftet die katalytisch wirksame Schicht nicht oder nur schlecht. Die Wirksamkeit des Katalysators ist so nicht sicher gestellt.

Entsprechend raue Oberflächen können sich aber auch lokal ausbilden. Ist das Aluminium in der metallischen Folie nicht homogen verteilt, bilden sich an den Stellen, an denen die Konzentration an Aluminium lokal 6% übersteigt, raue Oberflächenbereiche aus, an denen die katalytisch wirksame Schicht ebenfalls nicht haften kann.

Die Dicke einer solchen metallischen Folie liegt bevorzugt im Bereich von 30 µm bis 200 µm, bevorzugt beträgt die Dicke 100 µm. Ist die Folie dünner als 30 µm, so weist sie keine ausreichende thermische und mechanische Stabilität auf. Liegt die Dicke der Folie bei über 200 µm, so ist diese zu starr, um in die gewünschte Form gebracht zu werden. Zudem steigt das Gewicht des Katalysators an.

Wenigstens ein Teil der Kanäle der Trägerstruktur (3) weisen die wenigstens teilweise auf der Innenseite aufgebrachte erste katalytisch wirksame Schicht (1) und wenigstens teilweise die erste Schicht (1) bedeckende zweite katalytisch wirksame Schicht (2) auf. Dabei kann die zweite Schicht (2) die Oberfläche der ersten Schicht (1) zu wenigstens 50%, vorzugsweise zu wenigstens 60%, weiter bevorzugt zu wenigstens 75%, insbesondere zu wenigstens 85%, speziell zu wenigstens 90% oder zu wenigstens 95% bedecken.

Bevorzugt bedeckt die zweite Schicht (2) die Oberfläche der ersten Schicht (1) nicht vollständig. Vorzugsweise bedeckt die zweite Schicht (2) die Oberfläche der ersten Schicht (1) in einem Bereich von 60% bis 95%, bevorzugt von 70% bis 90%, insbesondere von 72% bis 88%. Dabei hat sich gezeigt, dass ein Verhältnis der Länge der ersten Schicht (1) entlang der Strömungsrichtung zur Länge der zweiten Schicht (2) entlang der Strömungsrichtung in einem Bereich 1:2 bis 2:1, vorzugsweise von 1:1,5 bis 1,5:1, insbesondere von 1:1,2 bis 1,2:1 besonders bevorzugt ist.

Bedeckt die zweite Schicht (2) die Oberfläche der ersten Schicht (1) vollständig, so ist die Umsatzrate des Katalysators geringer. Ebenso zeigt sich ein negativer Effekt, wenn die erste Schicht (1) in Strömungsrichtung nach der zweiten Schicht (2) angeordnet ist, es also keine Überlappung der beiden Schichten gibt. Bei einer solchen Zonenbeschichtung, bei der kaum oder keine Überlappung der beiden Schichten auftritt, ist die CO-Emission deutlich höher, als bei einer Lagenbeschichtung, in der erste Schicht (1) und zweite Schicht (2) überlappen. Der Umsatz des aus dem Verbrennungsmotor strömenden Abgases wird also schlechter, wie aus der nachfolgenden Tabelle 2 ersichtlich. Angegeben sind die Emissionswerte, also die Menge an CO und NOₓ, die nach dem Durchgang durch den Katalysator nach dem offiziellen Messzyklus gemessen werden. Eine Verschlechterung der Emissionen insgesamt ergibt sich sowohl bei einer Zonenbeschichtung als auch bei einer Lagenbeschichtung, wenn die Schichten gealtert, also einer Temperaturbehandlung ausgesetzt werden. Jedoch auch nach der Alterung werden die Emissionsgrenzwerte von 2,0 g/km für CO und 0,150 g/km für NOₓ eingehalten.

**Tabelle 6:**

| **Art der Beschichtung** | **CO [g/km]** | **NOₓ [g/km]** |
|---|---|---|
| Zonenbeschichtung | 0,507 | 0,094 |
| Lagenbeschichtung | 0,368 | 0,107 |
| | | |
| Zonenbeschichtung, gealtert | 0,912 | 0,127 |
| Lagenbeschichtung, gealtert | 0,625 | 0,127 |

Der Mehrschichtkatalysator (4) kann neben der ersten Schicht (1) und der zweiten Schicht (2) weitere katalytisch aktive Schichten, welche mittels des erfindungsgemäßen Verfahrens bereitgestellte Zusammensetzungen enthalten, umfassen. Bevorzugt weist er zwei katalytisch wirksame Schichten auf.

In einer bevorzugten Ausführungsform sind die erste Schicht (1) und die zweite Schicht (2) derart angeordnet, dass im Betrieb das Abgas zuerst mit der zweiten Schicht (2) in Kontakt tritt. Diese Ausführungsform ist in Fig. 2 dargestellt. Strömt das Abgas aus dem Verbrennungsmotor in den Katalysator, so trifft es in dieser Ausführungsform zunächst auf die zweite Schicht (2). An dieser können Stickoxide reduziert werden, indem Sauerstoff aus dem Reaktionsgleichgewicht entfernt wird. Diese Reaktion muss ausreichend schnell erfolgen, um einen hohen Umsatz zu erreichen, was durch Platin und/oder Rhodium in der zweiten Schicht (2) ermöglicht wird. Anschließend strömt das Abgas die erste Schicht (1) an, welche Palladium umfasst. Palladium in der ersten Schicht (1) sorgt für einen langsameren Ein- und Ausbau von Sauerstoff im Sauerstoffspeichermaterial gegenüber der zweiten Schicht (2). Durch das Palladium wird jedoch die Sauerstoffspeicherkapazität des Sauerstoffspeichers der ersten Schicht (1) erhöht. Im Sauerstoffspeicher der zweiten Schicht (2) eingelagerter Sauerstoff kann daher an den Sauerstoffspeicher der ersten Schicht (1) abgegeben werde. Eine Sättigung des Sauerstoffspeichers der zweiten Schicht (2), welche zu einer Verschlechterung der Reduktion der Stickoxide führen würde, wird somit vermieden.

Durch die Verwendung von Platin und/oder Rhodium in der zweiten Schicht (2) und den Einsatz von Palladium in der ersten Schicht (1) weist die zweite Schicht (2) unter Einsatzbedingungen eine höhere Aktivität hinsichtlich der Stickoxidreduktion als die erste Schicht (1) auf.

Der Mehrschichtkatalysator ist vorzugsweise ein 3-Wege-Katalysator. Dieser ist besonders bevorzugt für die Abgasnachbehandlung von 4-Takt Benzin Motoren, insbesondere für die Abgasnachbehandlung von Motorrädern mit 4-Takt Benzin Motoren mit einem Hubraum bis zu 2000 cm³. Bei diesen tritt im Betrieb eine große Lambdaschwankung in einem Bereich von 0,7 bis 1,3, insbesondere von 0,8 bis 1,2 auf. Der Mehrschichtkatalysator (4) kann auch bei diesen Lambdaschwankungen die Abgase fast vollständig umsetzen.

Ein Mehrschichtkatalysator (4) kann beispielsweise in Kleinmotoren, in Motorrädern, der Automobilindustrie, in Nutzfahrzeugen, für Industrie- und Spezialanwendungen und bei Marineapplikationen verwendet werden.

Ein Herstellungsverfahren für den beschriebenen Mehrschichtkatalysator (4) umfasst die folgenden Schritte:
a. Bereitstellen einer Trägerstruktur,
b. Bereitstellen einer ersten katalytisch wirksamen Zusammensetzung,
c. Beschichten der Trägerstruktur mit der ersten katalytisch aktiven Zusammensetzung zur Herstellung einer ersten Schicht (1),
d. Bereitstellen einer zweiten katalytisch wirksamen Zusammensetzung,
e. Beschichten der Trägerstruktur mit der ersten katalytisch aktiven Zusammensetzung zur Herstellung einer zweiten Schicht (2),
wobei die Beschichtung derart erfolgt, dass die erste und die zweite Zusammensetzung so aufgebracht werden, dass die erste Schicht (1) wenigstens teilweise von der zweiten Schicht (2) bedeckt wird.

Bevorzugt sind die erste Schicht (1) und die zweite Schicht (2) derart angeordnet, dass in Betrieb das Abgas zuerst mit der zweiten Schicht (2) in Kontakt tritt.

Nach dem Beschichten mit der ersten katalytisch wirksamen Zusammensetzung und vor dem Beschichten mit der zweiten katalytisch wirksamen Zusammensetzung kann die Trägerstruktur zusammen mit der ersten Zusammensetzung getempert werden. Bevorzugt erfolgt dies bei einer Temperatur von 500 bis 900°C, bevorzugt von 650 bis 850°C, am meisten bevorzugt 750°C. Auch nach dem Beschichten mit der zweiten katalytisch wirksamen Zusammensetzung wird die Trägerstruktur bevorzugt bei einer Temperatur von 700 °C oder mehr getempert. Vor dem jeweiligen Tempern kann die aufgebrachte Zusammensetzung noch getrocknet werden. Die Trocknung kann bei Temperaturen im Bereich von 90 °C bis 150 °C, bevorzugt bei 110 °C erfolgen. Üblicherweise erfolgt die Trocknung an Luft, eine chemisch-inerte Atmosphäre ist nicht notwendig, stört den Trocknungsvorgang jedoch auch nicht.

Beschichtung im Sinne der vorliegenden Anmeldung umfasst alle möglichen aus dem Stand der Technik bekannten Beschichtungsarten, wie einspritzen, sprühen oder eintauchen.

## Patentansprüche

1. Verfahren zur Bereitstellung einer katalytisch wirksamen Zusammensetzung zur Abgasnachbehandlung von Verbrennungsabgasen in einem Mehrschichtkatalysator (4), wobei die Zusammensetzung ein Sauerstoffspeichermaterial, das ein oder mehrere aus der Gruppe der seltenen Erden ausgewählte Metalle aufweist, ein oder mehrere aus Platin, Rhodium und Palladium ausgewählte Edelmetalle, und Aluminiumoxid umfasst, wobei das Sauerstoffspeichermaterial ein Cer-Zirkonium-Oxid ist, wobei die Zusammensetzung eine Teilchengröße d90 im Bereich von 10 µm bis 35 µm, bevorzugt von 15 µm bis 30 µm, besonders bevorzugt von 19 µm bis 24 µm, eine Teilchengröße d50 im Bereich von 2,5 µm bis 11,5 µm, bevorzugt von 4 µm bis 10 µm, besonders bevorzugt von 5,5 µm bis 8,5 µm und eine Teilchengröße d10 im Bereich von 1 µm bis 4 µm, bevorzugt von 1 µm bis 2 µm, besonders bevorzugt von 1,0 µm bis 1,8 µm aufweist, und wobei das Verfahren die folgenden Schritte umfasst:
(i) Einbringen des Sauerstoffspeichermaterials in Wasser,
(ii) Zugabe von Edelmetall oder Edelmetallen in Form eines ihrer Salze in Lösung und
(iii) Einbringen von Aluminiumoxid in die in Schritt (ii) erhaltene Aufschlämmung.

2. Verfahren nach Anspruch 1, wobei in Schritt (ii) während der Zugabe der Lösung der pH-Wert in einem Bereich von 4 bis 5 gehalten wird.

3. Verfahren nach Anspruch 2, wobei die Einstellung des pH-Wertes mit Ammoniak NH₃ erfolgt.

4. Verfahren nach einem der vorhergehenden Ansprüche ohne ein Mahlen der in Schritt (iii) erhaltenen Mischung.

## Claims

1. Method for the provision of a catalytically effective composition for exhaust gas after-treatment of combustion exhaust gases in a multilayer catalyst (4), whereby the composition comprises an oxygen storage material that comprises one or more metals selected from the group of the rare earth metals, one or more precious metals selected from platinum, rhodium, and palladium, and aluminium oxide, whereby the oxygen storage material is a cerium-zirconium oxide, whereby the composition has a particle size d90 in the range of 10 µm to 35 µm, preferably of 15 µm to 30 µm, particularly preferably of 19 µm to 24 µm, a particle size d50 in the range of 2.5 µm to 11.5 µm, preferably of 4 µm to 10 µm, particularly preferably of 5.5 µm to 8.5 µm, and a particle size d10 in the range of 1 µm to 4 µm, preferably of 1 µm to 2 µm, particularly preferably of 1.0 µm to 1.8 µm, and whereby the method comprises the following steps:
(i) introducing the oxygen storage material into water,
(ii) adding precious metal or precious metals in the form of one of the salts thereof in solution, and
(iii) introducing aluminium oxide into the slurry obtained in step (ii).

2. Method according to claim 1, whereby the pH value is maintained in a range of 4 to 5 during the addition of the solution in step (ii).

3. Method according to claim 2, whereby the pH value is adjusted with ammonia NH₃.

4. Method according to any one of the preceding claims not involving a grinding of the mixture obtained in step (iii).

## Revendications

1. Procédé de mise à disposition d'une composition catalytiquement active pour le post-traitement de gaz d'échappement des gaz d'échappement de combustion dans un catalyseur multicouches (4), dans lequel la composition comprend un matériau accumulateur d'oxygène qui présente un ou plusieurs métaux sélectionnés parmi le groupe des terres rares, un ou plusieurs métaux nobles sélectionnés parmi le platine, rhodium et palladium, et de l'oxyde d'aluminium, dans lequel le matériau accumulateur d'oxygène est un oxyde de cérium-zirconium, dans lequel la composition présente une taille particulaire d90 dans la région de 10 µm à 35 µm, de préférence de 15 µm à 30 µm, de manière particulièrement préférée de 19 µm à 24 µm, une taille particulaire d50 dans la région de 2,5 µm à 11,5 µm, de préférence de 4 µm à 10 µm, de manière particulièrement préférée de 5,5 µm à 8,5 µm, et une taille particulaire d10 dans la région de 1 µm à 4 µm, de préférence de 1 µm à 2 µm, de manière particulièrement préférée de 1,0 µm à 1,8 µm, et dans lequel le procédé comprend les étapes suivantes :
(i) introduction du matériau accumulateur d'oxygène dans de l'eau,
(ii) addition de métal noble ou métaux nobles sous forme d'un de leurs sels en solution et
(iii) introduction d'oxyde d'aluminium dans la suspension obtenue à l'étape (ii).

2. Procédé selon la revendication 1, dans lequel la valeur de pH est maintenue dans une région de 4 à 5 à l'étape (ii) pendant l'addition de la solution.

3. Procédé selon la revendication 2, dans lequel le réglage de la valeur de pH s'effectue avec de l'ammoniac NH₃.

4. Procédé selon une des revendications précédentes sans broyage du mélange obtenu à l'étape (iii).
